# EUROPÄISCHE PATENTSCHRIFT

(11) **EP 1 772 635 B1**
(45) Veröffentlichungstag und Bekanntmachung des Hinweises auf die Patenterteilung: **01.01.2014**
(21) Anmeldenummer: 06019552.6
(22) Anmeldetag: 19.09.2006
(51) Int. Cl.: F16B 11/00, F16B 21/07, F16B 37/04, B29C 65/36, B29C 65/46, B62D 27/02, C09J 5/06, H05B 6/02

(54) **Verbindungselement und Verfahren zu seiner Befestigung auf einer Oberfläche**
Connecting element and procedure for its attachment on a surface
Raccord et procédure de sa fixation sur une surface

(30) Priorität: 04.10.2005 DE 102005047469; 17.03.2006 DE 102006012411
(43) Veröffentlichungstag der Anmeldung: 11.04.2007
(73) Patentinhaber: Böllhoff Verbindungstechnik GmbH, 33649 Bielefeld (DE); DELO Industrieklebstoffe GmbH & Co. KG, 86899 Landsberg am Lech (DE)
(72) Erfinder: Stumpf, Michael, 33611 Bielefeld (DE); Meschut, Gerson, Dr., 33659 Bielefeld (DE); Draht, Torsten, Dr., 33758 Schloß Holte (DE); Weigel, Gudrun, 86916 Kaufering (DE); Walther, Christian, 86899 Landsberg/Lech (DE)
(74) Vertreter: Heyer, Volker

(56) Entgegenhaltungen:
- EP-A- 0 219 217
- EP-A- 0 504 957
- DE-A1- 4 416 884
- DE-A1- 10 359 466
- GB-A- 2 119 810
- US-A- 3 532 316
- US-A- 3 535 481
- US-A- 4 830 558
- US-A1- 2004 112 531

## Beschreibung

### 1. Gebiet der Erfindung

Die vorliegende Erfindung betrifft ein Verbindungselement und ein Verfahren zu seiner Befestigung auf einer Oberfläche.

### 2. Hintergrund der Erfindung

Verschiedene Anwendungen, beispielsweise im Bereich der Computer, Mobilfunktechnik oder im Automobilbau, fordern Verbindungselemente, die verschiedene Teile dauerhaft oder lösbar miteinander verbinden. Bekannte Verbindungselemente durchdringen häufig die Bauteile oder sind in deren Oberflächen eingeschmolzen. Daraus ergibt sich jedoch ein unattraktives Erscheinungsbild der Bauteiloberfläche.

Es ist des Weiteren ein Nachteil, wenn zur Verbindung von Bauteilen rückseitige Markierungen, Einfallstellen oder Ausbeulungen notwendig sind. In diesem Zusammenhang ist es ebenfalls nicht akzeptabel, wenn beispielsweise die Befestigung von Verbindungselementen zu Farbumschlägen des Bauteilmaterials führt.

Es ist daher die Aufgabe der vorliegenden Erfindung, ein Verbindungselement und ein Verfahren zu seiner Befestigung auf einer Bauteiloberfläche bereitzustellen, mit dem gleichzeitig eine verlässliche Verbindung und ein akzeptables Erscheinungsbild der Verbindung realisierbar sind.

### 3. Zusammenfassung der Erfindung

Die vorliegende Erfindung umfasst ein Verbindungselement zum Befestigen auf einer Oberfläche gemäß dem unabhängigen Patentanspruch 1, sowie ein Verfahren zum Befestigen des oben genannten Verbindungselements gemäß dem unabhängigen Patentanspruch 7. Vorteilhafte Ausgestaltungen und Weiterentwicklungen der vorliegenden Erfindung gehen aus der folgenden Beschreibung, den Zeichnungen und den anhängenden Patentansprüchen hervor.

Das Verbindungselement umfasst ein hülsenförmiges Aufnahmeteil, das in seinem Inneren einen Bestandteil einer mit einem zu befestigenden Element herstellbaren formschlüssigen und/oder kraftschlüssigen Verbindung aufweist, insbesondere ein Gewinde oder ein Schnappelement, eine sich an das Aufnahmeteil anschließende flanschartige Erweiterung mit einer Senkung an der dem Aufnahmeteil abgewandten Seite und Ausrundungen an der dem Aufnahmeteil zugewandten Seite, die derart ausgestaltet sind, dass das Verbindungselement durch Füllen der Senkung mit einem geeigneten Befestigungsmittel an der Oberfläche befestigbar und Steifigkeitssprünge in der flanschartigen Erweiterung verkleinerbar sind.

Das obige Verbindungselement weist eine umgekehrt T-förmige Gestalt auf, in der das breitere Stück dem Befestigen des Verbindungselements auf der Oberfläche dient. Das breitere Stück, das eine ausreichende Befestigungsfläche gegenüber der Oberfläche eines Bauteils bereitstellt, ist mit einem hülsenförmigen Aufnahmeteil kombiniert. Das hülsenförmige Aufnahmeteil ist bevorzugt wie ein Hohlzylinder aufgebaut, so dass das Innere des Hohlzylinders, im Speziellen die innere Oberfläche, zum Herstellen einer gewünschten Verbindung mit einem weiteren Bauteil nutzbar ist. Diese gewünschte Verbindung ist beispielsweise eine formschlüssige oder kraftschlüssige oder eine kombiniert formschlüssige und kraftschlüssige Verbindung. Das breitere Stück des T-förmigen Verbindungselements weist zudem zur Unterstützung der Verbindung mit der Oberfläche eines Bauteils eine Senkung auf, die mit einem Befestigungsmittel, beispielsweise Klebstoff, füllbar ist. Die flanschartige Erweiterung des Verbindungselements wird zum Befestigen auf die Oberfläche aufgesetzt und ist daher mechanischen Belastungen ausgesetzt. Diese mechanischen Belastungen führen zu temporären Verformungen der flanschartigen Erweiterung, deren mechanische Spannungen das Verbindungselement belasten. Um diese mechanischen Belastungen des Verbindungselements zu begrenzen, so dass eine Zerstörung des Verbindungselements während des Aufsetzens auf der Oberfläche verhindert ist, weist die flanschartige Erweiterung Ausrundungen an der dem Aufnahmeteil zugewandten Seite auf. Diese Ausrundungen verhindern Steifigkeitssprünge im Aufnahmeteil, so dass auf diese Weise mechanische Spannungsspitzen reduziert oder sogar verhindert sind.

Das Verbindungselement wird durch Licht und Wärme aushärtender Klebstoff auf die Oberfläche oder in diese Senkung eingebracht und nachfolgend durch ein gezieltes Belichten und Erwärmen der Senkung, des Klebstoffs bzw. des gesamten Verbindungselements ausgehärtet. Gemäß einer weiteren bevorzugten Ausführungsform des Verbindungselements besteht eine Verbindungsöffnung zwischen der Senkung und dem Inneren des hülsenförmigen Aufnahmeteils. Durch diese Öffnung kann überschüssiger Klebstoff oder eingeschlossene Luft den Innenraum der Senkung verlassen.

Gemäß einer weiteren Ausführungsform des erfindungsgemäßen Verbindungselements umfasst dessen flanschartige Erweiterungen Durchbrüche, in denen das Befestigungsmittel, vorzugsweise der durch Licht und Wärme aushärtende Klebstoff, beim Bilden eines Formschlusses zwischen der flanschartigen Erweiterung und dem Befestigungsmittel aufnehmbar ist. Es ist weiterhin bevorzugt, diese und/oder weitere Durchbrüche in der flanschartigen Erweiterung vorzusehen, die derart angeordnet und geformt sind, dass Licht in die Senkung der flanschartigen Erweiterung einstrahlbar ist. Dieses Licht, das beispielsweise mit Hilfe von Lichtleitkabeln gezielt auf die Durchbrüche gerichtete wird, belichtet den in der Senkung befindlichen Klebstoff, wodurch ein Aushärtevorgang initiiert und vorzugsweise eine Vorfixierung des Verbindungselements auf der Oberfläche realisiert wird.

Als Ausführungsbeispiel (nicht Teil der Erfindung) kann ein Aushärteelement zum Aushärten eines durch Wärme aushärtenden Befestigungsmittels in Kombination mit dem oben beschriebenen Verbindungselement benutzt werden, das über die Erwärmung des Aushärteelements und eines geeigneten Befestigungsmittels innerhalb der Senkung an einer Oberfläche befestigbar ist, während das Aushärteelement die folgenden Merkmale aufweist: einen Körper, in dem eine elektrische Hohlspule zum Erzeugen eines magnetischen Feldes aufgenommen ist, einen Ferritkern, der innerhalb der Hohlspule angeordnet ist, um das magnetische Feld auszurichten, so dass durch Anlegen einer elektrischen Wechselspannung an die Hohlspule ein an das Aushärteelement angrenzendes Werkstück aus Metall, insbesondere eine Oberfläche eines Bauteils oder ein Verbindungselement, erwärmbar ist. Mit Hilfe der erzeugten Wärme wird der in der Senkung des Verbindungselements befindliche Klebstoff ausgehärtet. Die elektrische Spule innerhalb des Aushärteelements ist vorzugsweise als Hohlspule ausgebildet, d. h. sie besteht aus einem in Spulenform gewickelten metallischen Rohr. Durch dieses Rohr wird ein Kühlmittel geleitet, um eine Erwärmung des Aushärteelements zu verringern.

Die vorliegende Erfindung umfasst zudem ein Verfahren zum Befestigen des oben genannten Verbindungselements auf der Oberfläche eines Bauteils. Dieses Verfahren umfasst die folgenden Schritte: Füllen der Senkung mit einem dualhärtenden Klebstoff oder Aufbringen des dualhärtenden Klebstoffs auf die Oberfläche, Belichten des dualhärtenden Klebstoffs mit Licht eines ausgewählten Wellenlängenbereichs, Aufsetzen des Verbindungselements auf die Oberfläche und Zuführen von Wärme zum dualhärtenden Klebstoff, so dass durch Aushärten des dualhärtenden Klebstoffs das Verbindungselement an der Oberfläche befestigbar ist. Das erfindungsgemäße Befestigungsverfahren ist derart variabel, dass der dualhärtende Klebstoff entweder in die Senkung des Verbindungselements oder an der Stelle der Oberfläche aufgebracht wird, an der das Verbindungselement später befestigt werden soll. Nachfolgend wird der Klebstoff belichtet, um den Aushärtevorgang des dualhärtenden Klebstoffs zu initiieren. Das bedeutet, dass in Abhängigkeit von der über das Licht zugeführten Energie zunächst ein Verfestigen des dualhärtenden Klebstoffs erzielt wird. Wird innerhalb dieser Phase das Verbindungselement auf die Oberfläche aufgesetzt, ist ein Vorfixieren des Verbindungselements auf der Oberfläche realisierbar.

Das oben beschriebene Vorfixieren schafft die Voraussetzung für einen weiteren bevorzugten Schritt des Befestigungsverfahrens. Dieser umfasst ein Zwischenbehandeln des vorfixierten Verbindungselements, wie beispielsweise ein Transportieren der Oberfläche mit Verbindungselement und/oder ein Reinigen der Oberfläche mit Verbindungselement.

Gemäß einer weiteren bevorzugten Ausführungsform wird während des Befestigungsverfahrens die Oberfläche mit Verbindungselement in einen Ofen zur Wärmezufuhr überführt oder es wird Wärme über ein magnetisches Wechselfeld innerhalb des Verbindungselements erzeugt, sofern dieses aus Metall besteht oder einen metallischen Anteil aufweist. Es ist ebenfalls denkbar, über Wärmestrahler und/oder Gebläse die Wärme dem dualhärtenden Klebstoff zwischen Verbindungselement und Oberfläche zuzuführen. Mit Hilfe dieser Wärme wird der dualhärtende Klebstoff zum Befestigen des Verbindungselements auf der Oberfläche ausgehärtet.

Gemäß einer weiteren Ausführungsform des erfindungsgemäßen Befestigungsverfahrens erfolgt vor dem finalen Aushärten des dualhärtenden Klebstoffs durch Wärme ein Vorformen des dualhärtenden Klebstoffs. Mit Hilfe dieses Vorformens wird der dualhärtende Klebstoff in eine geometrische Form gebracht, die eine gewünschte Orientierung und/oder Anordnung des Verbindungselements auf der Oberfläche unterstützt. Es ist in diesem Zusammenhang ebenfalls bevorzugt, dass der dualhärtende Klebstoff vor dem Vorformen derart belichtet wird, dass eine Viskositätssteigerung des Klebstoffs eingesetzt hat, die das Vorformen und die Beibehaltung der erzeugten Vorformen des Klebstoffs unterstützt. Auf dieser Grundlage werden beispielsweise Verbindungselemente auf geneigten Oberflächen dauerhaft befestigt. Das Befestigungsmittel oder der Klebstoff, der für diese Anwendung in seiner Konsistenz nicht fließend aber plastisch formbar ist, stellt somit die konstruktive Grundlage für die gewünschte Orientierung zwischen Bauteiloberfläche und Verbindungselement bereit.

Die obigen Verfahrensschritte werden vorzugsweise durch ein Reinigen der Oberfläche vor dem Positionieren des Verbindungselements und durch ein Kalibrieren einer elektrischen Versorgung des Aushärteelements ergänzt. Das Kalibrieren betrifft beispielsweise die elektrische Wechselspannung, eine Frequenz und eine Zuschaltdauer der elektrischen Wechselspannung, so dass eine zum Aushärten des Befestigungsmittels erforderliche Wärmemenge gezielt anpassbar ist.

### 4. Kurze Beschreibung der begleitenden Zeichnung

Die bevorzugten Ausführungsformen der vorliegenden Erfindung werden unter Bezugnahme auf die begleitende Zeichnung näher erläutert.

Figur 1 zeigt eine schematische Darstellung des Verbindungs- und des Aushärteelements, die teilweise als Schnittbild dargestellt sind.

Figur 2 zeigt eine schematische Darstellung der Befestigung des Verbindungselements auf einem schrägen Bauteil.

Figur 3 zeigt eine Schnittdarstellung einer abgewandelten Ausführungsform eines Verbindungselementes.

Figur 4 zeigt ein Flussdiagramm einer bevorzugten Ausführungsform des erfmdungsgemäßen Befestigungsverfahrens.

### 5. Detaillierte Beschreibung der bevorzugten Ausführungsformen

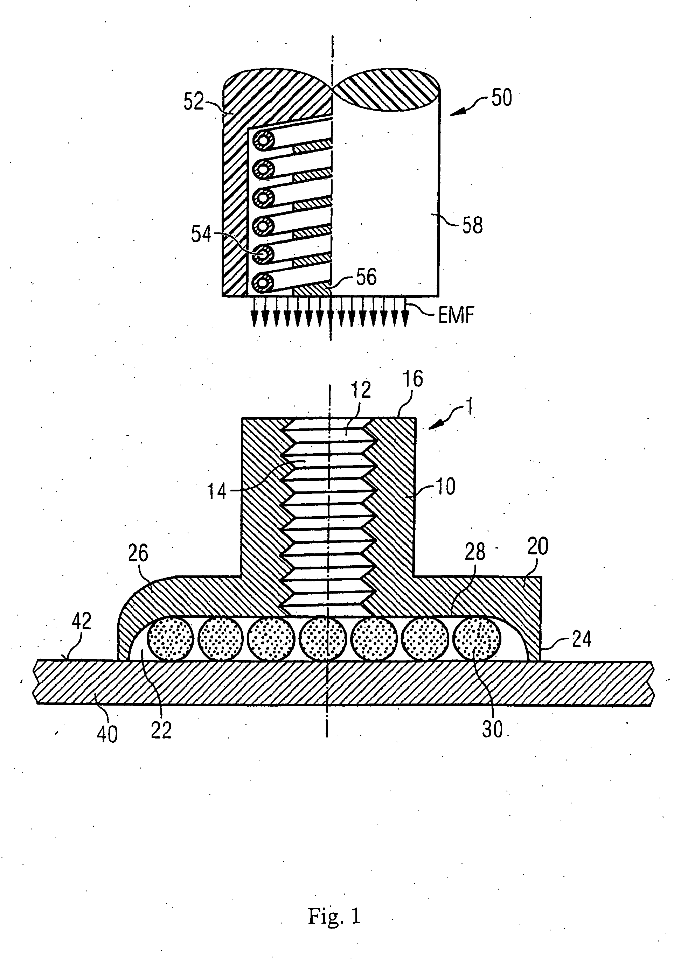

Die begleitende Figur 1 zeigt beispielgebend ein dünnwandiges Bauteil 40, an dem das Verbindungselement 1 befestigt ist. Gemäß unterschiedlicher Anwendungsgebiete besteht das Bauteil 40 aus Blech, Kunststoff oder Glas und wird unter anderem in Mobiltelefonen, Computern, Kraftfahrzeugen und dergleichen eingesetzt. Trotz der Befestigung des Verbindungselements 1 auf der Oberfläche 42 des Bauteils 40 wird das äußere Erscheinungsbild des Bauteils 40 nicht gestört. Das Verbindungselement 1 wird nämlich derart mit dem Bauteil 40 verbunden, dass keine Durchbrüche, Bohrungen, Materialanhäufungen, Ausbeulungen, Einfallstellen, Farbumschläge im Material, Markierungen oder dergleichen auftreten bzw. notwendig sind.

Wie man anhand der Figur 1 erkennen kann, hat das Befestigungselement 1 eine umgekehrt T-förmige Gestalt, die durch ein hülsenförmiges Aufnahmeteil 10 und durch eine flanschartige Erweiterung 20 gebildet wird. Das Aufnahmeteil 10 und die Erweiterung 20 sind integral oder in anderer geeigneter Weise miteinander verbunden. Entsprechend den Stabilitätsanforderungen des Befestigungselements 1 bestehen das Aufnahmeteil 10 und die Erweiterung 20 aus einem Metall oder einem Kunststoff mit Metallanteil, dessen Nutzen aus der weiteren Beschreibung hervorgehen wird.

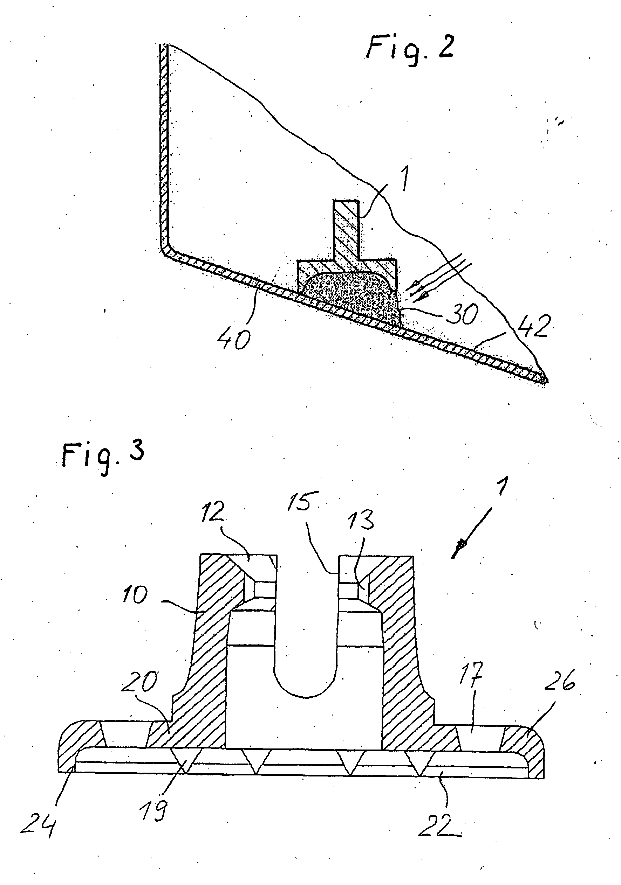

Das hülsenförmige Aufnahmeteil 10 dient dem Aufnehmen eines zu befestigenden Elements (nicht gezeigt) in seinem Innern 12. Zu diesem Zweck wird das Innere 12 des Aufnahmeteils 10 bevorzugt derart gestaltet, dass es mit dem zu befestigenden Element eine formschlüssige oder kraftschlüssige oder eine kombinierte formschlüssige und kraftschlüssige Verbindung bildet. Beispielgebende Ausgestaltungen des Inneren 12 wären ein Gewinde 14, wie ein Muttern- oder Bolzengewinde, oder ein Schnappelement (vgl. Figur 3). Die mit Hilfe des hülsenförmigen Aufnahmeteils 10 bereitgestellte Verbindung kann somit lösbarer oder dauerhafter Natur sein.

Die sich an das Aufnahmeteil 10 anschließende flanschartige Erweiterung 20 umfasst eine Senkung 22, die durch die Ränder 24 begrenzt wird. Die Ränder 24 liegen im befestigten Zustand des Verbindungselements 1 am Bauteil 40 an der Bauteiloberfläche 42 an, so dass innerhalb der Senkung 22 ein abgeschlossener Raum gebildet wird. Somit sind die Ränder 24 idealerweise an die Oberfläche 42 angepasst. Dieser Raum wird begrenzt durch die Ränder 24, die Oberfläche 42 und den inneren Verlauf 28 der Senkung 22.

Der durch die Senkung 22 gebildete Hohlraum dient der Aufnahme eines geeigneten Befestigungsmittels, damit dieses Befestigungsmittel eine verlässliche Verbindung zwischen dem Verbindungselement 1 und dem Bauteil 40 herstellt. Ein derartiges Befestigungsmittel 30 ist vorzugsweise Klebstoff, der durch die Begrenzung des Innenraums in diesem gehalten wird und trotzdem das Verbindungselement 1 verlässlich am Bauteil 40 befestigt. Gemäß einer bevorzugten Ausführungsform wird zum Befestigen des Verbindungselements 1 die Senkung 22 mit durch Licht und Wärme dualhärtendem Klebstoff gefüllt, dessen Nutzen im weiteren Verlauf der Beschreibung noch näher erläutert wird. Die Licht-Wärme-Härtung des Klebstoffes kann durch das Aufschmelzen eines festen Härters bei Temperaturerhöhung erfolgen. Es ist ebenso möglich, die Beschleunigung chemischer Reaktionen bei einer Temperaturerhöhung zu nutzen und somit die Polymerisation des Klebstoffes zu starten. Weiterhin können thermische Initiatoren eingesetzt werden, die bei Temperaturerhöhungen aktive Polymerisationsstarter erzeugen. Auch können strahlungshärtende Klebstoffe verwendet werden, die sowohl radikalisch wie auch kationisch polymerisieren. Hierbei erfolgt der einleitende Schritt durch Absorption von Strahlung in einem Photoinitiator, der in nachfolgenden Prozessen die als Initiator der Polymerisation benötigte chemische Spezies erzeugt. Beide Mechanismen werden in einer Rezeptur verwirklicht, wodurch sich dualhärtende Klebstoffe bilden lassen. Beispiele für derartige Klebstoffe sind Materialien auf Basis von Epoxidharzen, Acrylaten und Silikonen.

Da nach Aufsetzen des Verbindungselements 1 auf die Oberfläche 42 des Bauteils 40 der Innenraum der Senkung 22 abgeschlossen wäre, könnte ein den Innenraum der Senkung 22 übersteigendes Klebstoffvolumen nur schwer aus der Senkung 22 austreten und würde auf diese Weise ein Befestigen des Verbindungselements 1 behindern. Daher wird gemäß einer Ausführungsform eine Verbindung zwischen der Senkung 22 und dem Inneren 12 des hülsenförmigen Aufnahmeteils 10 bereitgestellt, durch die ein übermäßiges Klebstoffvolumen den Innenraum der Senkung 22 verlassen könnte. Weiterhin kann durch diese Öffnung die beim Fügevorgang eingeschlossene Luft den Innenraum der Senkung 22 verlassen. Nur so ist zuverlässig gewährleistet, dass die Oberflächen des Innenraums vollflächig mit Klebstoff benetzt sind und einmal festgelegte Festigkeitswerte der Verbindungselement-Klebstoff-Verbindung dauerhaft und zuverlässig in einer Serienfertigung erreicht werden. Gleichzeitig ergeben sich durch diese Ausführungsform entscheidende Vorteile für den Fügeprozess, da die aufgebrachten Klebstoffmengen eine größere Mengentoleranz haben können. So wird überschüssiges Material nicht zwischen den Rändern 24 und der Oberfläche 42 ausgepresst, was zu einem unsauberen Erscheinungsbild führen würde, sondern es entweicht durch die Verbindungsöffnung.

Gemäß einer weiteren Ausführungsform umfasst die flanschartige Erweiterung 20 an ihrer Außenseite Ausrundungen 26, mit deren Hilfe Steifigkeitssprünge in der flanschartigen Erweiterung 20 verkleinert oder sogar vollständig vermieden werden. Wird beispielsweise die flanschartige Erweiterung 20 beim Aufsetzen des Verbindungselements 1 auf die Oberfläche 42 verformt, treten gerade an Stellen von Steifigkeitssprüngen mechanische Spitzenbelastungen auf. Diese können zum Versagen des Verbindungselements 1 oder zu dessen Beschädigung führen.

Wie oben bereits erwähnt, besteht die flanschartige Erweiterung 20 bevorzugt aus dem gleichen Material wie das hülsenförmige Aufnahmeteil 10. Damit sich das Verbindungselement 1 unter der Wirkung eines elektromagnetischen Wechselfeldes erwärmt, werden das hülsenförmige Aufnahmeteil 10 und die flanschartige Erweiterung 20 bevorzugt aus Metall oder einem Kunststoff mit Metallanteil hergestellt. Es ist ebenfalls denkbar, lediglich die flanschartige Erweiterung 20 aus Metall oder einem Kunststoff mit Metallanteil herzustellen, da nur sie über ein wirkendes elektromagnetisches Wechselfeld Wärme für den in der Senkung 22 befindlichen durch Wärme aushärtenden Klebstoff 30 bereitstellen muss. Somit dient die flanschartige Erweiterung 20 als kombinierter Wärmeleiter und "Wärmeerzeuger". Die obigen Funktionen von Aufnahmeteil 10 und Erweiterung 20 setzen voraus, dass diese Komponenten ebenfalls aus einem hitzebeständigen Material zusammengesetzt sind.

Gemäß einer weiteren Ausführungsform wird das Verbindungselement 1 nicht mit Hilfe des Aushärteelements 50 (siehe unten), sondern im Ofen, in einer Wärmekammer oder durch Wärmezufuhr über ein Gebläse oder Wärmestrahler und das dementsprechende Aushärten des dualhärtenden Klebstoffs befestigt (siehe ebenfalls unten). In diesem Fall sind als Material des Verbindungselements 1 neben Metall auch Kunststoffe mit und ohne Metallanteil bevorzugt.

Eine abgewandelte Ausführungsform des Verbindungselementes 1 ist in Figur 3 dargestellt. Bei diesem Verbindungselement 1 ist das hülsenförmige Aufnahmeteil 10 als Schnappelement mit einem nach innen ragenden Schnappvorsprung 13 und gegenüberliegenden Längsschlitzen 15 zur Erhöhung der Flexibilität des Aufnahmeteils 10 ausgebildet. Die flanschartige Erweiterung 20 hat an ihrer Außenseite wiederum Ausrundungen 26, mit deren Hilfe Steifigkeitssprünge in der flanschartigen Erweiterung 20 verkleinert oder sogar vollständig vermieden werden. Bei dieser Ausführungsform ist die flanschartige Erweiterung 20 mit mehreren Durchbrüchen 17 in Form von kegeligen Löchern versehen, in die beim Erwärmungsvorgang Befestigungsmittel (Klebstoff) fließen kann, um einen Formschluss ("Schließkopf") zwischen dem Verbindungselement 1 und dem Befestigungsmittel 30 zu bilden. Es ist ebenfalls bevorzugt, die Durchbrüche 17 derart in Anzahl, Anordnung und Form vorzusehen, dass über diese Durchbrüche 17 Licht in die Senkung 22 der flanschartigen Erweiterung 20 einstrahlbar ist. Da sich innerhalb der Senkung 22 bevorzugt dualhärtender Klebstoff befindet, wird durch den Lichteintrag über die Durchbrüche 17 eine Aushärtung initiiert. Auf dieser Grundlage wird das bereits auf der Oberfläche 42 positionierte Verbindungselement durch Lichteintrag vorfixiert. Der Lichteintrag erfolgt bevorzugt über Lichtleiter, die nahe der Durchbrüche 17 angeordnet sind.

Die flanschartige Erweiterung 20 ist ferner mit mehreren in die Senkung 22 ragenden Vorsprüngen 19 versehen, die im dargestellten Ausführungsbeispiel kegelig ausgebildet sind. Die Vorsprünge 19 erstrecken sich bis in die Ebene des Außenrandes 24, so dass sie während des Verbindungsvorganges an der Oberfläche 42 des Bauteils 40 anliegen und gemeinsam mit dem Rand 24 als Abstandshalter dienen. Sie wirken somit in gewisser Weise als "Energierichtungsgeber", die für eine gleichmäßige Dicke des Befestigungsmittels (Klebstoffes) sorgen. Es ist auch eine Ausführungsform möglich, bei der der Rand 24 weggelassen ist und lediglich als Abstandshalter dienende Vorsprünge vorgesehen sind.

Wie bereits erwähnt, kann das Verbindungselement 1 auch aus Kunststoff hergestellt werden. Besonders vorteilhaft ist die Verwendung eines transparenten Kunststoffes, wie z. B. PC oder PMMA. Dies unterstützt die Verwendung eines mit Licht und Wärme dualhärtenden Klebstoffes, der mittels das Verbindungselement 1 durchdringendem Licht vorfixiert und durch Wärme ausgehärtet wird. Auf diese Weise wird der Einsatzbereich von dualhärtenden Klebstoffsystemen als Befestigungsmittel 30 erheblich erweitert.

Die Verwendung von Kunststoff als Material für das Verbindungselement hat darüber hinaus den Vorteil, dass das Verbindungselement in einfacher Weise umformtechnisch, insbesondere durch Spritzgießen, hergestellt werden kann.

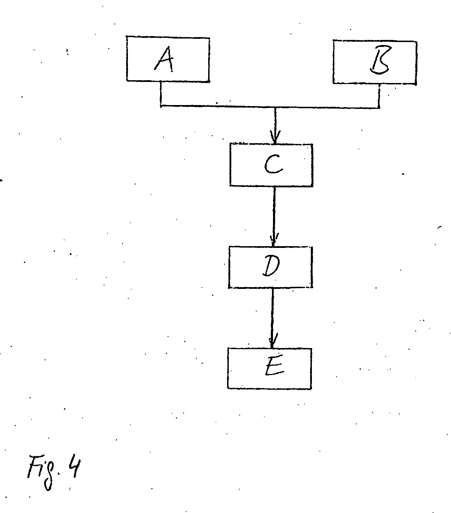

Nach einem Reinigen der Oberfläche 42 des Bauteils 40 und der Senkung 22 des Verbindungselements 1, sofern dies in Abhängigkeit vom jeweiligen Werkstoff erforderlich ist, wird ein durch Licht und Wärme dualhärtender Klebstoff 30 in die Senkung 22 oder auf die Oberfläche 42 aufgebracht. Der Klebstoff 30 wird entsprechend der jeweiligen technischen Anforderung ausgewählt. Diese Anforderung wird beispielsweise durch Angabe der Mindestwerte der Festigkeit, Alterungsbeständigkeit und Temperaturbeständigkeit vorgegeben. Das Aufbringen oder Applizieren des dualhärtenden Klebstoffs 30 erfolgt wahlweise mit einer bekannten Dosiertechnik in die Senkung 22 (Schritt A) oder auf die Oberfläche 42 des Bauteils 40 (Schritt B in Figur 4).

Nachdem der dualhärtende Klebstoff 30 aufgebracht worden ist (Schritte A; B), wird dieser mit Licht eines ausgewählten Wellenlängenbereichs belichtet. Durch das Licht wird dem dualhärtenden Klebstoff 30 Energie zugeführt, so dass eine polymere Reaktion im dualhärtenden Klebstoff 30 startet. Diese Reaktion führt entsprechend dem Energieeintrag zu einer zunehmenden Viskosität bzw. zu einem zunehmenden Aushärtegrad des dualhärtenden Klebstoffs 30. Strahlt man Licht in einem Wellenlängenbereich von ultravioletter A-Strahlung (ca. 320-400 nm), ultravioletter B-Strahlung (ca. 280-320 nm) und sichtbarem Licht, vorzugsweise in einem Bereich von 280-800 nm und weiter bevorzugt in einem Bereich von 320-550 nm ein, steigt die Viskosität durch die lichtinitiierte Vorhärtung des dualhärtenden Klebstoffs 30 schlagartig an. Die oben genannte Bestrahlung bzw. der Lichteintrag erfolgt vorzugsweise über einen Zeitraum von 1-10 Sekunden.

Durch die lichtinitiierte Vorhärtung ist der dualhärtende Klebstoff 30 bearbeitungsfest, das heißt das Verbindungselement 1 kann auf die Oberfläche 42 aufgesetzt werden und ist dort so fest, dass nachfolgend Oberfläche 42 mit Verbindungselement 1 transportiert, gereinigt oder anderweitig verarbeitet werden können. Die Dualhärtung des Klebstoffs 30 bringt somit auch Vereinfachungen im gesamten Herstellungsprozess der Oberfläche 42 mit Verbindungselement 1 mit sich, da nicht zwingend alle Herstellungsschritte an einem Ort durchgeführt werden müssen. Zusammenfassend initiiert somit das Belichten ein Aushärten des dualhärtenden Klebstoffs 30, so dass mit dem Aufsetzen das Verbindungselement 1 auf der Oberfläche 42 vorfixiert ist.

Nach dem Belichten wird während des Aufsetzens (Schritt D) des Verbindungselements 1 auf die Oberfläche 42 das Verbindungselement 1 manuell oder automatisch mit Hilfe einer Positioniereinrichtung auf der Oberfläche 42 des Bauteils 40 positioniert. Gemäß einer Ausführungsform erfolgt durch diese Positioniervorrichtung auch ein Andrücken des Verbindungselements 1 an die Oberfläche 42.

Es ist zudem bevorzugt, die Oberfläche 42 oder die Senkung 22 mit dualhärtendem Klebstoff 30 zu versehen und das Verbindungselement 1 nachfolgend auf die Oberfläche 42 aufzusetzen. Danach wird die Vorfixierung durch Lichteintrag initiiert, indem gezielt durch die Durchbrüche 17 (siehe oben) in die Senkung 22 und auf den dualhärtenden Klebstoff 30 eingestrahlt wird.

Eine weitere Ausführungsform und Verwendung des Verbindungselements 1 ist in Figur 2 schematisch dargestellt. Das Verbindungselement 1 ist in dieser Ausführungsform auf einer schiefen Ebene 42 eines Bauteils 40 befestigbar, ohne dass aufwändige und teure Vorrichtungen zum Setzen des Verbindungselements 1 erforderlich sind. Die Positionierung des Verbindungselements 1 in einer gewünschten Ausrichtung zur schiefen Ebene 42 des Bauteils 40 wird mit Hilfe des dualhärtenden Klebstoffs 30 gewährleistet. Figur 2 zeigt beispielsweise eine senkrechte Anordnung des Verbindungselements 1 in einem spitzen Winkel zur schiefen Ebene 42 des Bauteils 40. Diese Anordnung nutzt einen entsprechend den Ausrichtungsanforderungen geformten Klebstoffkeil 30 zwischen der schiefen Ebene 42 des Bauteils 40 und dem Verbindungselement 1. Es ist ebenfalls denkbar, den Klebstoff 30 in jede andere beliebige geometrische Form zu bringen, die eine gewünschte Ausrichtung sicherstellt. Um ein Fließen des dualhärtenden Klebstoffs 30 zu verhindern und diesen formbar zu machen, wird er bevorzugt belichtet, so dass seine Viskosität gezielt einstellbar ist. Es ist ebenfalls bevorzugt, Klebstoff 30 zu nutzen, der eine formbare Konsistenz aufweist, bereits bevor Licht eingestrahlt worden ist.

In einer ersten Etappe wird der dualhärtende Klebstoff oder Klebstoffkeil 30 durch Licht einer bestimmten Wellenlänge vorfixiert. Strahlt man beispielsweise zunächst mit Licht einer geeigneten Wellenlänge, insbesondere abgestimmt auf den verwendeten Photoinitiator, auf den Klebstoff 30 ein, erfolgt auf diese Weise eine schnelle und effektive Vorfixierung des Verbindungselements 1 auf der schiefen Ebene 42. Nachfolgend wird dann der Klebstoff 30 in einer zweiten Etappe vollständig durch Wärme ausgehärtet. Basierend auf der Vorfixierung kann das Bauteil 40 mit Verbindungselement 1 vor der vollständigen Aushärtung an einen anderen Ort transportiert werden. Es ist ebenfalls denkbar, andere beliebige Behandlungen vorzunehmen, deren Belastungen die vorfixierende Verbindung zwischen Bauteil 40 und Verbindungselement 1 nicht lösen.

Gemäß einer anderen Alternative könnte zunächst eine Mehrzahl von Verbindungselementen 1 auf der Ebene 42 durch Licht vorfixiert werden. Dies eröffnet die Möglichkeit, fehlerhaft positionierte und vorfixierte Verbindungselemente 1 mit geringem Aufwand und Schaden wieder zu entfernen und neu zu positionieren und vorzufixieren. Des Weiteren kann zunächst eine Mehrzahl von Verbindungselementen 1 vorfixiert werden. Nachfolgend wird der Klebstoff dieser Mehrzahl von Verbindungselementen 1 gleichzeitig mit mehreren Aushärteelementen 50 oder gemeinsam im Ofen oder durch anderweitiges Zuführen von Wärme ausgehärtet. Auf diese Weise werden Zeit, Kosten und mehrere Arbeitsschritte gespart.

Durch das bereits oben erwähnte Zuführen von Wärme zum dualhärtenden Klebstoff 30 (Schritt E) wird dieser ausgehärtet und das Verbindungselement 1 an der Oberfläche 42 befestigt. Mit Hilfe der oben genannten lichtinitiierten Vorfixierung kann das Aushärten direkt nach dem Vorfixieren oder zeitlich versetzt erfolgen, wenn noch Zwischenbehandlungen des auf der Oberfläche 42 vorfixierten Verbindungselements durchgeführt werden sollen. Die vollständige Aushärtung des dualhärtenden Klebstoffs 30 durch die Wärmezufuhr erfolgt vorzugsweise in einer Zeitspanne von 3 bis 30 Minuten und in einem bevorzugten Temperaturbereich von 120 °C bis 150 °C. Gemäß einer Ausführungsform wird die Wärme in einem Ofen zugeführt, in dem die Oberfläche 42 mit Verbindungselement 1 angeordnet ist. Gemäß einer weiteren Ausführungsform wird die Wärme über ein Gebläse oder Wärmestrahler zugeführt. Es ist des Weiteren bevorzugt, die Wärme mittels eines Aushärtelements 50 zuzuführen.

Wie man in der Figur 1 erkennen kann, besteht das Aushärteelement 50 vorzugsweise aus einem Kunststoffkörper 58, in dem eine Hohlspule 54 gehalten ist. Diese elektrische Hohlspule 54 dient dem Erzeugen eines magnetischen Felds, wenn eine entsprechende elektrische Spannung an sie angeschlossen wird. Die Hohlspule 54 besteht beispielsweise aus einem Kupferrohr oder einem anderen elektrisch leitfähigen Material. Durch das Rohr der Hohlspule 54 fließt ein Kühlmittel, beispielsweise Wasser, um eine Erwärmung des Aushärteelements 50 zu vermeiden oder zumindest einzuschränken. Um mit Hilfe der Hohlspule 54 ein gerichtetes Magnetfeld zu erzeugen, ist innerhalb der Hohlspule 54 ein Ferritkern 56 angeordnet.

Das durch eine an die Hohlspule 54 angeschlossene elektrische Wechselspannung erzeugte scharf gebündelte und gerichtete elektromagnetische Feld EMF wird durch Anlegen des Aushärteelements 50 an das Verbindungselement 1 über die Grenzfläche 16 übertragen. Das Aushärteelement 50 wirkt als eine externe Wärmequelle ähnlich einem Laserpointer oder zylindrischen Schweißwerkzeug und erwärmt in kürzester Zeit den Klebstoff 30 in der Fügezone 28 und härtet diesen aus.

Um den dualhärtenden Klebstoff 30 bei diesem Vorgang nicht zu überhitzen, wird das Aushärteelement vor der Nutzung als externe Wärmequelle kalibriert. Im Rahmen des Kalibrierens des Aushärteelements 50 wird eine elektrische Versorgung des Aushärteelements 50, bevorzugt die versorgende elektrische Wechselspannung, die Frequenz der Wechselspannung und die Zuschaltdauer der elektrischen Wechselspannung, gezielt variiert, um die durch das Aushärteelement 50 übertragene Wärmemenge zu erfassen. Sobald die in Abhängigkeit von der elektrischen Versorgung des Aushärteelements 50 ermittelte Wärmemenge bekannt ist, kann die elektrische Versorgung des Aushärteelements 50 optimal auf das verwendete Befestigungsmittel 30, beispielsweise unterschiedliche Arten von durch Licht und Wärme aushärtendem Klebstoff 30, angepasst werden.

Mit Hilfe des Aushärteelements 50 und der Wärmezufuhr über Induktion ist der obige Zeitbereich für die Wärmezufuhr und die maximale Aushärtung des dualhärtenden Klebstoffs 30 verkleinerbar.

In Abhängigkeit von der Weiterverarbeitung der Oberfläche 42 mit Verbindungselement 1 ist daher die Wärme zur vollständigen Aushärtung des dualhärtenden Klebstoffs 30 variabel zuführbar. Somit ist es ebenfalls bevorzugt, das Aushärten des dualhärtenden Klebstoffs 30 im Ofen mit einer Aushärtephase eines Lackierprozesses oder eines ähnlichen Wärme erfordernden Verarbeitungsvorgangs zu kombinieren.

## Patentansprüche

1. Verbindungselement (1) zum Befestigen auf einer Oberfläche (42), das die folgenden Merkmale aufweist:
a. ein hülsenförmiges Aufnahmeteil (10), das in seinem Inneren (12) einen Bestandteil einer mit einem zu befestigenden Element herstellbaren formschlüssigen und/oder kraftschlüssigen Verbindung aufweist, insbesondere ein Gewinde (14) oder ein Schnappelement,
b. eine sich an das Aufnahmeteil (10) anschließende flanschartige Erweiterung (20) mit einer Senkung (22) an der dem Aufnahmeteil (10) abgewandten Seite und aus Rundungen (26) an der dem Aufnahmeteil (10) zugewandten Seite, die derart ausgestaltet sind, dass
c. das Verbindungselement (1) mit Hilfe eines geeigneten Klebstoffs (30) in der Senkung (22) an der Oberfläche (42) befestigbar und Steifigkeitssprünge in der flanschartigen Erweiterung (20) verkleinerbar sind, während das Verbindungselement (1) **dadurch gekennzeichnet ist, dass**
d. das Innere (12) des hülsenförmigen Aufnahmeteils (10) mit der Senkung (22) in Verbindung steht, um ein Ausweichen des Klebstoffs (30) aus der Senkung (22) in das Innere (12) des hülsenförmigen Aufnahmeteils (10) zu gewährleisten, und dass es aus strahlungsdurchlässigem Kunststoff besteht, um den Klebstoff (30) durch Strahlungseintrag zu härten.

2. Verbindungselement (1) gemäß Anspruch 1, in dem die flanschartige Erweiterung (20) Ränder (24) aufweist, die die Senkung (22) begrenzen und zur Anlage an der Oberfläche (42) ausgebildet sind.

3. Verbindungselement (1) gemäß einem der vorhergehenden Ansprüche, dessen flanschartige Erweiterung (20) Durchbrüche (17) aufweist, in denen Klebstoff (30) zwecks Formschluss zwischen der flanschartigen Erweiterung (20) und dem Klebstoff (30) aufnehmbar ist.

4. Verbindungselement (1) gemäß einem der vorhergehenden Ansprüche 1 bis 3, dessen flanschartige Erweiterung (20) Durchbrüche (17) aufweist, die derart angeordnet und geformt sind, dass Licht in die Senkung (22) der flanschartigen Erweiterung (20) einstrahlbar ist.

5. Verbindungselement (1) gemäß einem der vorhergehenden Ansprüche, dessen flanschartige Erweiterung (20) mit in die Senkung (22) vorstehenden, die Oberfläche (42) berührenden Vorsprüngen (19) versehen ist.

6. Verbindungselement (1) gemäß einem der vorhergehenden Ansprüche, das Kunststoff mit Metallanteil besteht, so dass es durch ein elektromagnetisches Wechselfeld erwärmbar ist.

7. Befestigungsverfahren eines Verbindungselements (1) gemäß einem der Ansprüche 1 bis 6 an einer Oberfläche (42), das die folgenden Schritte aufweist:
a. Füllen (A) der Senkung (22) mit einem dualhärtenden Klebstoff oder Aufbringen (B) des dualhärtenden Klebstoffs auf die Oberfläche (42) und **gekennzeichnet durch** die weiteren Schritte:
b. Belichten (C) des dualhärtenden Klebstoffs mit Licht eines ausgewählten Wellenlängenbereichs,
c. Aufsetzen (D) des Verbindungselements (1) auf die Oberfläche (42) und Vorformen des dualhärtenden Klebstoffs in eine geometrische Form entsprechend einer gewünschten Orientierung zwischen der Oberfläche (42) und dem zu befestigenden Verbindungselement (1) sowie
d. Zuführen von Wärme (E) zum dualhärtenden Klebstoff, so dass **durch** Aushärten des dualhärtenden Klebstoffs das Verbindungselement (1) an der Oberfläche (42) befestigbar ist.

8. Befestigungsverfahren gemäß Anspruch 7, dessen Belichten ein Aushärten des dualhärtenden Klebstoffs initiiert, so dass mit dem Aufsetzen das Verbindungselement (1) auf der Oberfläche (42) vorfixiert ist.

9. Befestigungsverfahren gemäß einem der Ansprüche 7 oder 8 mit dem weiteren Schritt:
Überführen der Oberfläche (42) mit Verbindungselement (1) in einen Ofen zur Wärmezufuhr.

10. Befestigungsverfahren gemäß Anspruch 7 mit dem weiteren Schritt:
Zwischenbehandeln des vorfixierten Verbindungselements (1), vorzugsweise Transportieren und/oder Reinigen.

11. Befestigungsverfahren gemäß einem der Ansprüche 7 bis 10 mit dem weiteren Schritt:
manuelles oder maschinelles Aufsetzen und Andrücken des Verbindungselements (1) an die Oberfläche (42).

## Claims

1. Joining element (1) for attachment on a surface (42), which exhibits the following features:
a. a sleeve-shaped accommodation part (10), which exhibits in its interior (12) a component of a positive and/or non-positive connection to be produced with an element to be attached, in particular a thread (14) or a snap-on element,
b. a flange-like extension (20) connecting to the accommodation part (10) with an indentation (22) on the side turned away from the accommodation part (10) and fillets (26) on the side turned toward the accommodation part (10), which are designed in such a way that
c. the joining element (1) can be attached to the surface (42) by filling the indentation (22) with a suitable adhesive (30) and stiffness cracks in the flange-like extension (20) can be reduced, the joining element (1) being **characterized in that**
d. the interior (12) of the sleeve-shaped accommodation part (10) is connected to the indentation (22) in order to guarantee a deviation of the adhesive (30) from the indentation (22) into the interior (12) of the sleeve-shaped accommodation part (10) and **in that** the joining element (1) is made of a plastic which is translucent to radiation in order to cure the adhesive (30) by radiation entry.

2. Joining element (1) in accordance with Claim 1, in which the flange-like extension (20) exhibits borders (24) which limit the indentation (22) and are constructed to rest on the surface (42).

3. Joining element (1) in accordance with any of the preceding claims, the flange-like extension (20) of which exhibits openings (17) in which the adhesive (30) can be held for the purpose of positive locking between the flange-like extension (20) and the adhesive (30).

4. Joining element (1) in accordance with one of the preceding claims 1 to 3, the flange-like extension (20) of which exhibits openings (17) which are arranged and formed in such a way that light can be irradiated into the indentation (22) of the flange-like extension (20).

5. Joining element (1) in accordance with any of the preceding claims, the flange-like extension (20) of which is provided with projections (19) protruding into the indentation (22), contacting the surface (42).

6. Joining element (1) in accordance with any of the preceding claims, which is made of plastic havinga metal content, so that it can be heated by an electromagnetic alternating field.

7. Method of attaching a joining element (1) in accordance with one of the claims 1 to 6 on a surface (42), which includes the following steps:
a. filling (A) of the indentation (22) with a dual curing adhesive or application (B) of the dual curing adhesive on the surface (42), and **characterized by** the further steps:
b. exposure (C) of the dual curing adhesive to the light of a selected spectral range,
c. placement (D) of the joining element (1) on the surface (42) and preforming of the dual curing adhesive into a geometrical shape corresponding to a desired orientation between the surface (42) and the joining element (1) to be attached, and
d. supply of heat (E) to the dual curing adhesive, so that by curing of the dual curing adhesive the joining element (1) can be attached on the surface (42).

8. Method according to Claim 7, whose exposure to light initiates a curing of the dual curing adhesive, so that the joining element (1) is preset with the placement on the surface (42).

9. Method according to one of the claims 7 or 8, with the additional step:
transfer of the surface (42) with joining element (1) to an oven for heat supply.

10. Method according to Claim 7, with the additional step:
intermediate processing of the preset joining element (1), preferably transport and/or cleansing.

11. Method according to one of the claims 7 to 10, with the additional step:
manual or mechanical placement and pressing of the joining element (1) on the surface (42).

## Revendications

1. Raccord (1) pour la fixation sur une surface (42), comportant les caractéristiques suivantes :
a. une pièce d'admission en forme de douille (10) comportant une pièce en son intérieur (12), en particulier un filet (14) ou un élément d'encliquetage, d'un assemblage par complémentarité de forme et/ou par adhérence réalisable avec un élément à fixer,
b. un élargissement du genre collet (20) à la suite de la pièce d'admission (10), avec un affaissement (22) du côté détourné de la pièce d'admission (10) et des arrondis (26) du côté tourné vers la pièce d'admission (10), lesquels sont conçus de telle manière que
c. le raccord (1) peut être fixé dans l'affaissement (22) sur la surface (42) à l'aide d'une colle appropriée (30), et que des écarts de rigidité dans l'élargissement du genre collet (20) peuvent être réduits, le raccord (1) étant **caractérisé en ce que**
d. l'intérieur (12) de la pièce d'admission en forme de douille (10) est relié à l'affaissement (22) afin de garantir le passage de la colle (30) de l'affaissement (22) vers l'intérieur (12) de la pièce d'admission en forme de douille (10), et **en ce qu'**il est constitué d'une matière plastique perméable au rayonnement, afin de durcir la colle (30) par irradiation.

2. Raccord (1) selon la revendication 1, dans lequel l'élargissement du genre collet (20) comporte des rebords (24) délimitant l'affaissement (22) tout en étant conçus pour s'appliquer sur la surface (42).

3. Raccord (1) selon l'une des revendications précédentes, dont l'élargissement du genre collet (20) comporte des brèches (17) dans lesquelles la colle (30) peut être admis, en vue d'une complémentarité de forme entre l'élargissement du genre collet (20) et la colle (30).

4. Raccord (1) selon l'une des revendications précédentes 1 à 3, dont l'élargissement du genre collet (20) comporte des brèches (17) agencées et formées de manière à ce qu'une lumière puisse être diffusée dans l'affaissement (22) de l'élargissement du genre collet (20).

5. Raccord (1) selon l'une des revendications précédentes, dont l'élargissement du genre collet (20) est pourvu de saillies (19) touchant la surface (42) et faisant saillie dans l'affaissement (22).

6. Raccord (1) selon l'une des revendications précédentes, constitué d'une matière plastique avec une part de métal, de manière à pouvoir être chauffé par un champ électromagnétique alternatif.

7. Procédé de fixation d'un raccord (1) selon l'une des revendications 1 à 6 sur une surface (42), comportant les étapes suivantes :
a. remplissage (A) de l'affaissement (22) avec une colle durcissable composite, ou application (B) de la colle durcissable composite sur la surface (42), et **caractérisé par** les étapes supplémentaires suivantes :
b. exposition (C) de la colle durcissable composite à une lumière d'une plage de longueurs d'onde sélectionnée,
c. montage (D) du raccord (1) sur la surface (42), et préformage de la colle durcissable composite selon une forme géométrique en fonction d'une orientation souhaitée entre la surface (42) et le raccord (1) à fixer, et
d. apport de chaleur (E) destiné à la colle durcissable composite, de manière à ce que le durcissement de la colle durcissable composite permette de fixer le raccord (1) sur la surface (42).

8. Procédé de fixation selon la revendication 7, dont l'exposition à la lumière provoque un durcissement de la colle durcissable composite, de manière à ce que le raccord (1) soit préfixé sur la surface (42) lors du montage.

9. Procédé de fixation selon l'une des revendications 7 ou 8, avec l'étape supplémentaire suivante :
- transfert de la surface (42) avec le raccord (1) dans un four pour l'apport de chaleur.

10. Procédé de fixation selon la revendication 7, avec l'étape supplémentaire suivante :
- traitement intermédiaire du raccord (1) préfixé, consistant de préférence en un transport et/ou un nettoyage.

11. Procédé de fixation selon l'une des revendications 7 à 10, avec l'étape supplémentaire suivante :
- montage manuel ou automatisé et appui du raccord (1) sur la surface (42).
